(19) Europäisches Patentamt
European Patent Office
Office européen des brevets

(11) EP 3 791 976 A1

(12) EUROPEAN PATENT APPLICATION

(43) Date of publication:
17.03.2021 Bulletin 2021/11

(21) Application number: 19196484.0

(22) Date of filing: 10.09.2019

(51) Int Cl.:
B22F 3/105 (2006.01)          B33Y 10/00 (2015.01)
B33Y 30/00 (2015.01)          B33Y 80/00 (2015.01)
B29C 64/153 (2017.01)          B29C 64/40 (2017.01)
B28B 1/00 (2006.01)          B29C 67/00 (2017.01)
B23K 15/00 (2006.01)          B22F 5/04 (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Siemens Aktiengesellschaft
80333 München (DE)

(72) Inventor: MATEKALO, Dragan
61230 Finspong (SE)

(54) SUPPORT STRUCTURE

(57) The present invention refers to a supported product manufactured using additive manufacturing, wherein the supported product provides an improved support structure. Furthermore, the present invention refers to a product required from such supported product. Additionally, the present invention refers to a method of manufacturing a product utilizing such supported product. Furthermore, the present invention refers to the use of such improved support structure to improve the manufacturing of such product. Additionally, the present invention refers to a computer program product utilized to perform such method. Furthermore, the present invention refers to a device for providing such computer program product.

FIG 2

EP 3 791 976 A1

## Description

The present invention refers to a supported product manufactured using additive manufacturing, wherein the supported product provides an improved support structure. Furthermore, the present invention refers to a product required from such supported product. Additionally, the present invention refers to a method of manufacturing a product utilizing such supported product. Furthermore, the present invention refers to the use of such improved support structure to improve the manufacturing of such product. Additionally, the present invention refers to a computer program product utilized to perform such method. Furthermore, the present invention refers to a device for providing such computer program product.

Additive manufacturing is a very flexible method of manufacturing utilizing building up a product by adding material on an existing part or right from the scratch. In recent years the possibilities significantly improved and this new method of manufacturing products has been introduced into industrial processes. Especially, the possibility to build up structures utilizing geometries not possible using conventional methods of manufacturing significantly increases the benefit provided herewith. Methods like 3D printing, for example, utilize a metal or metal composition powder being melted layer by layer to manufacture a complex 3D structure. Despite the high flexibility provided by such method certain requirements are still to be considered. For example, it can be necessary to support a part of such product to be printed to utilize methods like selective laser melting (SLM). Herein, such support may be provided by a structure also printed using such additive manufacturing method along with the real part and later be removed. Further process steps like grinding or milling steps can be utilized in this context to provide the final product. However, such post processing steps require a significant amount of time and effort. Especially when providing test pieces or low amounts of product providing an optimized post processing procedure provide problems. Thus, it is required to manually remove the corresponding support structure increasing the time required and possibly leading to damages of the product resulting in the product to be manufactured again. Therefore, a solution to provide a simple removal procedure for a wide variety of products especially minimizing the required manual interaction would be beneficial.

These problems are solved by the products and methods as disclosed hereafter and in the claims. Further beneficial embodiments are disclosed in the dependent claims and the further description. These benefits can be used to adapt the corresponding solution to specific needs or to solve further problems.

According to one aspect the present invention refers to a supported product manufactured using additive manufacturing, preferably 3D printing, wherein the supported product contains a product and a support structure, wherein the product and the support structure are connected by means of a connection providing different resistances against breaking in different directions. Such connection can be provided in different forms like a multitude of structures extending between the product and the support structure, a complex shaped structure like a multitude of interconnected walls providing a grid extending between the product and the support structure or combinations thereof. A common feature of typical embodiments of such connection is that it is a layer between the support structure and the product and provides no homogeneous material. While the counter part of the product and the support structure attached to the connection are typically solid materials the connection typically consists of a multitude of structures extending between the product and the support structure, wherein the space between these structures is either empty or filled with remains of the manufacturing procedure.

Surprisingly, it was noted that it is possible to provide such inhomogeneous support especially providing inhomogeneous breaking behavior to significantly simplify the removal procedure. In fact, it becomes possible to provide support structure providing the required stability during manufacturing and, for example, further processing steps like the removal of powder. Simultaneously, the structure can be brittle enough to simply remove the support structure by hitting said structure on the side based on the weakness of the structure against some force applied in such direction. This allows to significantly reduce the amount of labor for providing the corresponding parts, as the required post processing to remove support structure can be reduced to an almost insignificant amount of work compared to conventional support structures.

According to a further aspect the present invention refers to a product manufactured by removing the support structure of the inventive supported product. While it is possible to remove all remains of the connection from the product it was noted that for typical applications the amount of the connection remaining after breaking off the support structure is very low and the product can be easily utilized without such additional process step. In such cases the product still provides remains of the connection during its usage.

According to a further aspect invention refers to a method of manufacturing a product containing the steps of

- manufacturing an inventive supported product using additive manufacturing, preferably 3D printing, wherein the product provides a side to be placed upon, wherein the support structure is located at this side to be placed upon, and
- removing the support structure from the supported product by applying a force in a direction being not perpendicular to this side to be placed upon.

According to a further aspect the present invention refers to a use of the support structure for supporting a product during an additive manufacturing process, wherein the support structure is adapted to be removed to provide the product, wherein the product and the support structure are connected by means of a connection providing different resistances against breaking in different directions.

According to a further aspect the present invention refers to a computer program product with program commands to perform the inventive method.

According to a further aspect the present invention refers to a device for providing an inventive computer program product, wherein the device stores the computer program product and/or provides the computer program product for further use.

To simplify understanding of the present invention it is referred to the detailed description hereafter and the figures attached as well as their description. Herein, the figures are to be understood being not limiting the scope of the present invention, but disclosing preferred embodiments explaining the invention further.

Fig. 1 shows a schematic side view of a guide vane of a gas turbine.

Fig. 2 shows a schematic side view of the guide vane of figure 1 being supported by multiple inventive support structures.

Fig. 3 shows a schematic side view of figure 2, wherein the arrows indicate the direction the support structure provides an increased stability.

Fig. 4 shows a cutout of the schematic side view of figure 2, wherein a part of the connection of the inventive support structure is shown.

Fig. 5 shows a cutout of a schematic cross-section through a part of the connection connecting the product and the support structure.

Fig. 6 shows a cutout of a schematic cross-section showing the part of the connection as shown in figure 5 including the corresponding part of the product and the support structure.

Fig. 7 shows a schematic side view of the clamp utilized in a gas turbine supported by an inventive support structure and connected by a structure of the connection comparable to the part of the connection shown in figure 5.

Fig. 8 shows a cutout of the schematic side view of the supported product as shown in figure 7, wherein the end part of the support structure supporting the clamp is shown.

According to one aspect the present invention refers to a supported product as specified above.

While it is possible to provide a single support structure to support the whole product for typical embodiments, it was noted that utilizing a multitude of support structures is typically beneficial. According to further embodiments it is preferred that the supported product contains at least two support structures. For example, this allows to minimize the material required and utilize parts of the product to stabilize the supported product reducing the overall amount of material required to provide the supported product.

During common additive manufacturing methods the manufacturing method includes building the supported product starting from a base layer building upon that base layer the remaining supported product. Such base layer, thus, provides a side the supported product is to be placed upon. Also, it can be beneficial to include such support on the side to place the finally supported product upon such side for later processing steps. Herein, it was noted that it is beneficial to design the stability of the support structure in correlation to such side it is planned to place the supported product upon. According to further embodiments it is preferred that the supported product provides a side to be placed upon, wherein the connection provides a higher resistance against breaking perpendicular to the side to be placed upon than parallel to a plane along the side to be placed upon. It was noted, that such design significantly simplifies the post processing for typical cases.

Additive manufacturing methods are well established despite being relatively new. Especially additive manufacturing methods like 3D printing became topic for industrial applications in the past years and show a big potential to complement or replace existing conventional methods of manufacturing. The additive manufacturing methods are characterized by that a material is applied without some limiting element like some casting mold to build up the product. Examples of especially useful additive manufacturing methods are selective laser melting, electron beam melting and binder jetting. Such methods either build up a product utilizing a powder that typically is removed in a later step like it is done for binder jetting. Very useful for the current application are 3D printing additive manufacturing methods like selective laser melting and electron beam melting building up the product from a powder, wherein the powder is melted layer by layer. By repeating this melting process for each layer of the product the 3-dimensional element is provided.

To provide such products a number of additive manufacturing methods have been established. Examples are selective laser melting (SLM) or electron beam melting (EBM). According to further embodiments it is preferred that the supported product has been manufactured using a metal powder or metal composition powder. Herein, corresponding manufacturing methods allow to easily realize the inventive support structures and simultaneously benefit greatly from the inventive design, as such support structures allow to realize new designs for industrial purposes providing a significantly simplified post processing.

The additive manufacturing allows to flexibly design the properties of the supported product as required selecting the design according to certain frame conditions. Thus, the inventive supported product and method can be easily adapted to a plurality of possible products. According to further embodiments it is preferred that the force required for breaking off the support structure applied perpendicular to the side to be placed upon is at least 3 times, more preferred at least 5 times, even more preferred at least 15 times, the force required for breaking off the support structure parallel to a plane along the side to be placed upon. Adapting it according to such requirement further simplifies the labor required to provide the inventive support structure for arbitrary products.

Surprisingly, it was noted that it was even possible to realize the inventive design still fulfilling requirements like heat conductivity for manufacturing methods utilizing a selective melting of layers of metal powder and/or metal alloy powder. According to further embodiments the supported product has been manufactured by selectively melting layers of metal powder and/or metal alloy powder, wherein the connection is adapted to conduct the heat away from the currently processed layer. This allows to significantly increase the speed of the manufacturing procedures, as the cooling down of each layer before a new powder layer is applied can be shortened. For example, it is possible to realize the required heat conductivity by including a multitude of thin walls or thin pillars preferably direct in the same direction distributed over a larger area. For example, such thin walls provide little resistance against breaking in one direction, while they provide a significant increase the stability in two directions. Thin pillars on the other hand provide little resistance against such breaking force into the directions, while the structure is stable direction of such pillar. Such multitude of thin walls or thin pillars allow to easily tailor the breaking behavior based on requirements while still the heat conductivity can be tailored based on the number of walls and pillars provided.

A further method to provide a generic design method especially allowing to automate the attachment of support structures to products utilizes different types of connection areas. According to further embodiments it is preferred that the connection provides at least one first connection area and at least one second connection area, wherein the connection provides a higher stability within the at least one first connection area compared to the connection within the at least one second connection area. Such higher stability can, for example, be shown by replacing the structure of the connection within the first connection area by the structure of the connection utilized in the second connection area for determining the stability of the supported product by means of an example or simulation. Also, such determination may be directly realized by simulating the stability. Typically, it is preferred that especially the stability perpendicular to the side to be placed upon is determined. For example, such higher stability can be realized by including thicker structures connecting the product and the support structure. For example, the second area can be filled with a thin walled lattice structure. An example of such structure is known to the skilled person as Magics structure.

According to further embodiments it is preferred that the at least one first connection area and the at least one second connection area each provides an area based on the theoretical surface area of the product within the area of the connection in case the support structure including the connection would be removed, wherein the area of each of the at least first connection area provides a size of the at least 1%, more preferred at least 2%, even more preferred at least 2.5%, of the total size of the area of the at least one first connection area and the at least one second connection area. This allows to concentrate on specific design features more simply monitored during the additive manufacturing procedure. Thus, problems or failures during the manufacturing procedure can be more easily spotted and corrected before the supported product is finished.

According to further embodiments it is preferred that the at least one first connection area and the at least one second connection area each provides an area based on the theoretical surface area of the product within the area of the connection in case the support structure including the connection would be removed, wherein the area of each of the at least second connection area provides a size of the at least 7%, more preferred at least 9%, even more preferred at least 10%, of the total size of the area of the at least one first connection area and the at least one second connection area. For typical embodiments it was especially beneficial to provide such large areas of the second connection areas. It was noted that in case of failures during the manufacturing procedure requiring a manual detachment of the product from the support structure through the connection providing such large areas of the second connection allows to more easily and swiftly remove the support structure.

While it is possible to provide complex structures for the connection, it was noted that very simple structures already provides the desired properties simplifying the design and manufacturing procedure. According to further embodiments it is preferred that the total size of the area of the at least one first connection area and the at least one second connection area amounts to 100% of the area of the connection.

A very simple and beneficial type of first connection area takes the shape of a line extending through the connection. According to further embodiments it is preferred that the at least one first connection area contains at least one linear first connection area, more preferred each of the at least one first connection area is a linear area. For the sake of completeness, it is pointed out, and that such linear area does not have to be straight, but can also, for example, be curved. Providing such linear first connection areas resulting in wall like structures provide a significant stability along the wall, while the stability is significantly decreased perpendicular to such wall like structure. Furthermore, it was surprisingly noted that the properties of such wall like structure can be easily tailored as desired.

According to further embodiments it is preferred that the at least one first connection area is a linear area being enclosed by the at least one second connection area. For example, it can be realized in form of a central linear firm connection between the product and the support structure, wherein on each side of this first connection area the second connection area of lower stability is located. For example, the connection can consist of one central linear first connection area enclosed by two second connection areas. Such design is especially useful to be applied to provide an inventive connection for a multitude of designs.

A further design that can be realized for a multitude of product provides multiple linear areas arranged at opposite sides of the connection. According to further embodiments it is preferred that the at least first connection are two linear areas located at opposite sides of the connection, wherein the second connection area is located between these two linear areas. For example, it can be realized in form of two linear firm connections limiting the connection on opposite sides, wherein the area between those two linear firm connections is provided in form of a second connection area. However, it might also be realized in a comparable form, wherein, for example, a small second connection area is located even behind at least one or both of the first connection areas. In such case these second connection areas represent the outer parts of the connection. In such case, it is typically preferred that the distance from the end of the connection to each of the first connection areas is at most 10%, more preferred at most 8%, even more preferred at most 4%, of the total length of the connection measured perpendicular to the linear first connection.

A further design that can be realized for a variety of different designs utilizes a first connection area surrounding the second connection area. According to further embodiments it is preferred that the at least one first connection area surrounds a central part of the connection containing a second connection area. Herein, such first connection area can be located at the outer end of the connection or at least one further second connection area can be located adjacent to said first connection area and between the end of the connection and said first connection area. In such case, it is typically preferred that the distance from the end of the connection to the first connection areas is at most 10%, more preferred at most 8%, even more preferred at most 4%, of the total length of the connection measured perpendicular to the linear first connection.

For typical designs it was further noted that the ratio of the first connection area and the second connection area is typically above for certain limit. According to further embodiments it is preferred that the first connection area and the second connection area each provides an area based on the theoretical surface area of the product within the area of the connection in case the support structure including the connection would be removed, wherein the area of the second connection area is at least 3 times, more preferred at least 10 times, even more preferred at least 30 times, the size of the area of the first connection.

A very simple yet efficient structural element that can be utilized for the connection are wall like structures providing holes. According to further embodiments it is preferred that the connection provides at least one wall like structure, more preferred linear wall like structure, wherein the wall like structure contains holes. It is possible and beneficial for specific embodiments to provide such wall like structures as circles or in a rectangular shape enclosing an area of the connection. In such cases the connection is typically harder to break and provides more freedom for the direction of the force applied to break off the support structure. For typically embodiments, it is, however, preferred to provide a linear wall like structure. In such case a typically lower force is necessary and the provision of the specific design is easier and faster. For the sake of completeness, it is pointed out, and that such linear structure does not have to be straight, but can also, for example, be curved. This can be necessary to, for example, adapt to the outer form of the product or to provide a highly defined breaking behavior. Such type of structural element can easily be implemented utilizing automatic design tools as typically used for designing additive manufacturing instructions.

While testing the manufacturing procedure it was further noted that the holes included in such wall like structure should beneficially provide a minimum size. According to further embodiments it is preferred that the connection provides least one wall like structure, more preferred linear wall like structure, wherein the wall like structure contains at least one hole, wherein at least one hole provides connection lines, wherein the connection lines represent lines extending from one side of the hole to the other side of the hole through a center point of the hole, wherein the center point of the hole is a point is a cross section along the center plane of the wall like structure providing the smallest difference between the smallest and biggest connection line in the cross section along the center plane of the wall, wherein the smallest connection line of the at least one hole is at least 0.25mm, more preferred 0.3mm. Typically, it is preferred that at least 90%, more preferred at least 97%, even more preferred at least 99%, of the holes in the wall like structure provide such diameter, based on the volume of material left out to provide the hole. Typically, it is preferred that all holes provide such minimum size. It was noted that it seems to be far more complicated to achieve comparable results utilizing smaller holes.

Surprisingly, it was noted that it is typically beneficial to provide a certain minimum distance between holes especially like those fulfilling the abovementioned minimum size criteria. According to further embodiments it is preferred that the connection provides at least one wall like structure, more preferred linear wall like structure, wherein the wall like structure contains at least two holes, wherein the holes provide connection lines, wherein the connection lines represent lines extending from one side of the hole to the other side of the hole through a center point of the hole, wherein the center point of the hole is a point is a cross section along the center plane of the wall like structure providing the smallest difference between the smallest and biggest connection line in the cross section along the center plane of the wall, wherein the distance between two neighboring holes, especially two neighboring holes providing the aforementioned minimum size, of at least 90%, more preferred at least 97%, even more preferred at least 99%, of the holes is at least 1.4 times, more preferred at least 1.5 times, even more preferred at least 1.7 times, of the smallest connection line of the two neighboring holes, wherein the distance of the two neighboring holes provide is measured from center point to center point, and wherein the percentage of the holes is calculated based on the volume of material left out to provide the hole.

Furthermore, it was noted that for typical embodiments of the 3D printing it is beneficial to provide a connection providing a smoothened transition from the support structure to the product. Parts to be especially beneficially provided in this manner for typical embodiments are wall like structures and first connection areas. According to further embodiments the additive manufacturing is 3D printing providing a printing direction, wherein the connection provides at least one wall like structure, more preferred linear wall like structure, and/or at least one first connection area containing connecting elements, wherein preferred at least 90%, even more preferred at least 95%, even more preferred at least 99%, of the outer surface of the at least one wall like structure and/or the outer surface of the connecting elements provide an angle selected of at least 40°, more preferred at least 42°, even more preferred at least 44°, wherein the angle is measured in relation to a plane perpendicular to the printing direction. Naturally, the smallest angle possible is measured resulting in an upper limit of the angle being measured being 90°. This seems to provide, for example, very stable connections allowing to significantly divert the forces originating from the weight of the product during the manufacturing process.

Additionally or alternatively such wall like structures can be provided with an indentation, preferably located at the center area of the wall like structure, to further decrease the stability of said structure in one dimension. According to further embodiments it is preferred that the connection provides at least one wall like structure, more preferred linear wall like structure, wherein the wall like structure provides an indentation of the wall like structure in a cross-section perpendicular to the wall like structure over length of at least 90%, more preferred at least 93%, even more preferred at least 96%, of the wall like structure, wherein the term perpendicular to the wall like structure refers to an orientation being perpendicular to the center plane through the wall like structure.

Such indentations as specified above can be utilized to flexibly tailor a specific breaking behavior. Surprisingly, it was noted that techniques utilized to lumber can be beneficially applied to define a breaking direction and prevent, for example, material to be chipped off the product. Typically, it is preferred to provide such indentations on both sides of the wall like structure, more preferred linear wall like structure. This allows to easily break the wall like structure from both sides, wherein the crack extends from one indention on one side to the other indentation on the other side. For example, the wall like structure can be shaped like an X in such cross-section to provide a point of minimized stability extending along the wall like structure.

Additionally, it was noted that it is beneficial for typical design tools to define the lower limit of holes to be included in such structural feature. According to further embodiments it is preferred that the wall like structure contains at least N holes, wherein

$$N = \frac{L}{2.3 \cdot H}$$

, more preferred

$$N = \frac{L}{2.1 \cdot H}$$

,even more preferred

$$N = \frac{L}{1.8 \cdot H}$$

, wherein L is the average length of the wall like structure and H is the average height of the wall like structure. Unless specified otherwise such average value represents the arithmetic mean of said value. For typical embodiments it is preferred that the holes provide an average size in a cross-section along the wall like structure being at least $0.2 \cdot H^2$, more preferred at least $0.23 \cdot H^2$, even more preferred at least $0.27 \cdot H^2$.

Additionally or alternatively it was noted that the simplified procedure to provide the inventive connection includes to define an upper limit of the distance of neighboring roles that should be fulfilled. According to further embodiments it is preferred that the wall like structure provides a distance $D_n$ of at most $2 \cdot H$, more preferred at most $1.6 \cdot H$, even more preferred at most $1.1 \cdot H$, between two neighboring holes over at least 90%, more preferred at least 93%, even more preferred 96%, of the length of the wall like structure. For typical embodiments it is preferred that the holes provide an average size in a cross-section along the wall like structure being at least $0.2 \cdot H^2$, more preferred at least $0.23 \cdot H^2$, even more preferred at least $0.27 \cdot H^2$.

For example, in case a connection should provide a very inhomogeneous design it was noted that some automated design method containing a specified limit of the distance between the holes is an easy possibility to provide the required reduced stability of such wall like structure. According to further embodiments it is preferred that at least 90%, more preferred at least 94%, even more preferred 98%, of the wall like structure provides a distance $D_H$ of at most $1.4\sqrt{1.2 \cdot S}$, more preferred at most $1.3\sqrt{1.2 \cdot S}$, even more preferred at most $1.1\sqrt{1.2 \cdot S}$, wherein S is the average size of each hole in a cross section along the wall like structure, wherein the percentage of the wall like structure is calculated based on the length along the wall like structure, wherein within the corresponding area of the wall like structure two holes are provided that fulfill this requirement. For the sake of completeness, it is to be understood that said holes do not have to be adjacent holes. For example, a very small hole not fulfilling the requirement might be located between two holes fulfilling the requirement still resulting in said area to be included in the calculation of the overall area fulfilling said requirement.

Furthermore, it was noted that the inventive design is especially usefully applied to certain materials. Herein, it is preferred for typical embodiments that the supported product consists of metal, a metal alloy, a ceramic material or glass, more preferred of metal or a metal alloy. For example, a group of materials especially suited for this purpose are nickel superalloys.

According to a further aspect the present invention refers to a product manufactured by removing the support structure of the inventive supported product.

Surprisingly, it was noted that the inventive design can be especially beneficially applied to components of a continuous flow engine. Typically, such continuous flow engines utilize a stream of fluid continuously flowing through the engine to rotate a rotor converting the kinetic energy into electricity. For example, such fluid stream can be generated by means of burning a fuel using a burner in a gas turbine or boiling a liquid like water in a steam generator. Preferably, the continuous flow engine is a gas turbine. While the inventive design can be utilized for a huge variety of different components the manufacturing process of components like the hot path components of gas turbine benefit significantly from the inventive design.

According to a further aspect the present invention refers to a method of manufacturing a product containing the steps of

- manufacturing an inventive supported product using additive manufacturing, preferably 3D printing, wherein the product provides a side to be placed upon, wherein the support structure is located at this side to be placed upon, and
- removing the support structure from the supported product by applying a force in a direction being not perpendicular to the side to be placed upon.

To further simplify the further processing, it was noted that the inventive manufacturing method allows to already include signs or contact points to indicate how force should be applied by the operator wanting to removed the support structure. According to further embodiments the method contains including a sign and/or contact point on the support structure indicating the point or direction to apply force to remove the support structure. This allows to greatly reduce the risk of incorrect application of force for the post processing. Surprisingly, it was noted that the highly flexible manufacturing method brings the risk that the operator trying to remove the support structure might be unsure how to apply the corresponding force. Indicating such information directly on the support structure significantly simplifies the process.

According to a further aspect the present invention refers to a use of the support structure for supporting a product during an additive manufacturing process, wherein the support structure is adapted to be removed to provide the product, wherein the product and the support structure are connected by means of a connection providing different resistances against breaking in different directions.

According to a further aspect the present invention refers to a computer program product, tangibly embodied in a machine-readable storage medium, including instructions operable to cause a computing entity to execute an inventive method.

According to a further aspect the present invention refers to a storage device for providing an inventive computer program product, wherein the device stores the computer program product and/or provides the computer program product for further use.

The present invention was only described in further detail for explanatory purposes. However, the invention is not to be understood being limited to these embodiments as they represent embodiments providing benefits to solve specific problems or fulfilling specific needs. Herein, the specific embodiments disclosed above can be utilized separately or, preferably, the features of multiple embodiments are combined. The scope of the protection should be understood to be only limited by the claims attached.

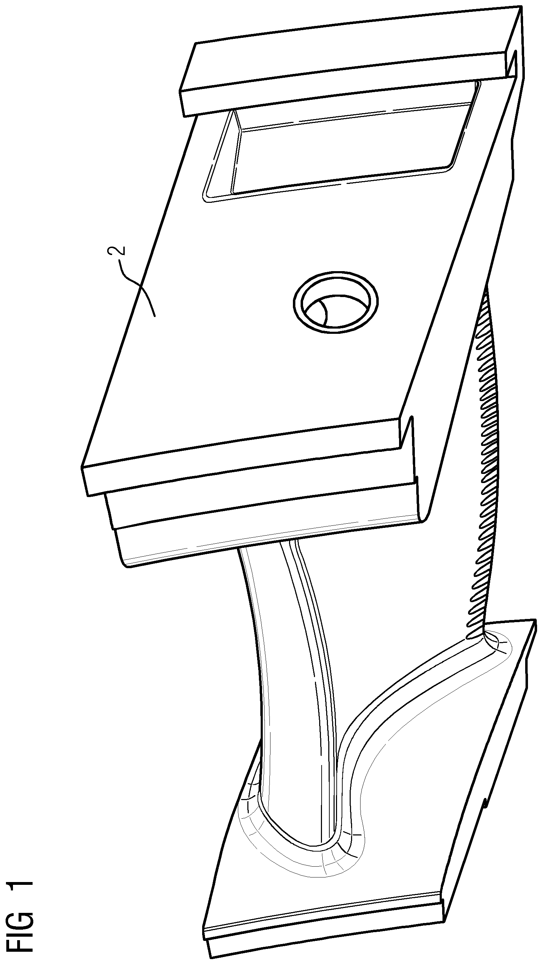

Fig. 1 shows a schematic side view of a guide vane of a gas turbine being an example of the product 2. The left and right side of the guide vane shown in figure 1 provides essentially plain surfaces that can be utilized to start the manufacturing process utilizing, for example, selective laser melting.

However, the middle part as shown requires a support structure for building up this part.

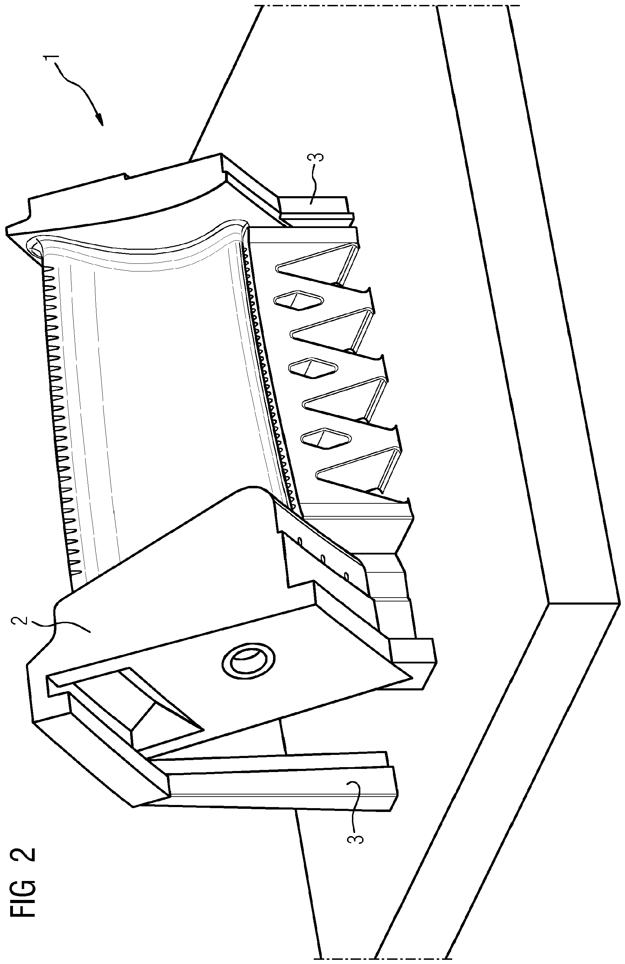

Fig. 2 shows a schematic side view of the guide vane of figure 1 being supported by multiple inventive support structures 3. Herein, the support structure 3 is attached to the product 2 by means of a connection being part of the support structure 3, wherein the connection provides different resistances against breaking in different directions. In more detail, the connection provides a significant stability against breaking in vertical direction. Simultaneously, the support structure 3 can be easily broken off by applying force using, for example, a hammer on the side of the support structure 3. Herein, the force required to break off the support structure 3 applied horizontally is less than 10 of the force required to break it off when applied vertically. The bottom part of the support structure 3 utilized provides a side of the supported product 1 allowing it to be placed on a plane surface.

The connection is designed to conduct the heat away from the currently multiplayer during the additive manufacturing method utilizing a metal alloy powder being melted layer by layer to build up the supported product 1. Simultaneously, it provides the stability required the complex three-dimensional shape of the product 2.

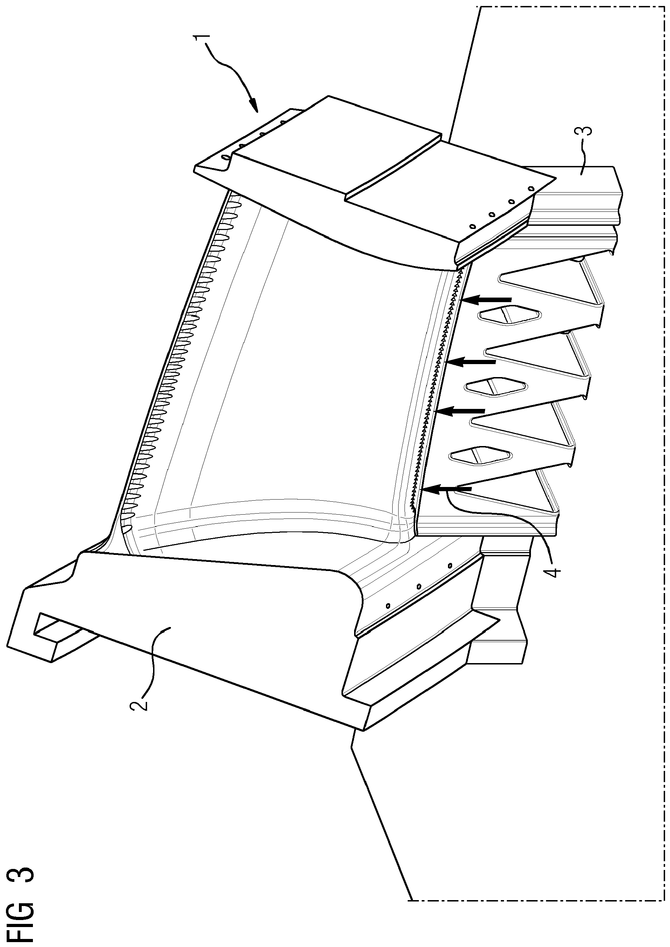

Fig. 3 shows a schematic side view of figure 2, wherein the arrows 4 indicate the direction the support structure 3 provides an increased stability. This direction represents the vertical direction providing the improved stability of the connection as well as the buildup direction during the additive manufacturing process.

Not shown in figure 3 is a sign indicating the direction to apply force to break off the support on the side of the support structure 3.

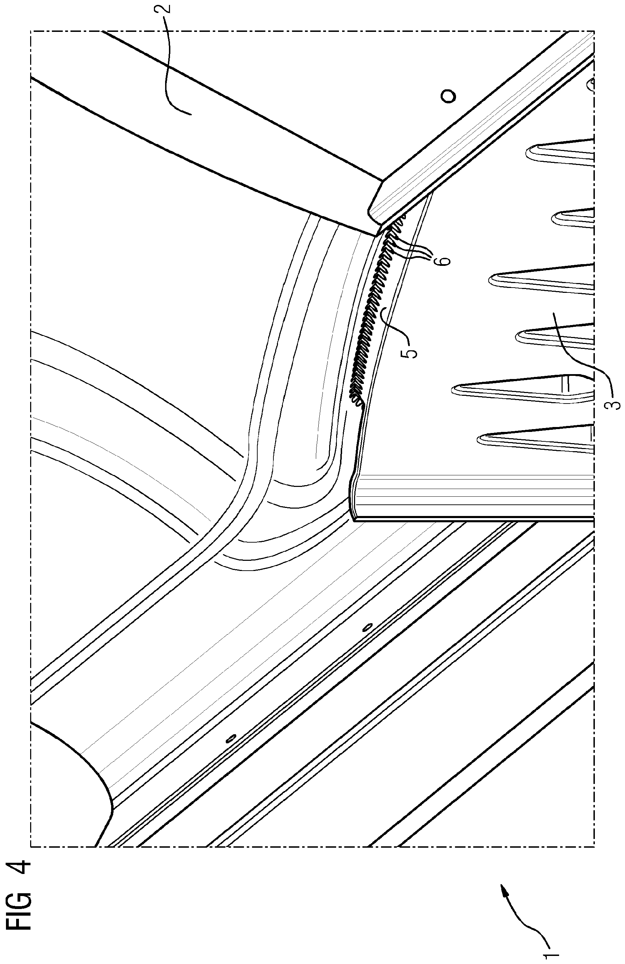

Fig. 4 shows a cutout of the schematic side view of figure 2, wherein a part of the connection of the inventive support structure 3 is shown. Herein, the main element 5 of the connection is shown in part providing the major part of the stability in horizontal direction. Said element 5 of the connection is located in a linear area extending along the middle part of the guide vane. As shown in figure 4 the element 5 provides a plurality of holes 6 decreasing the strength of said element 5 against a force applied horizontally. Not shown is the weaker connection besides this main element 5 contributing little resistance against breaking of the connection in horizontal direction.

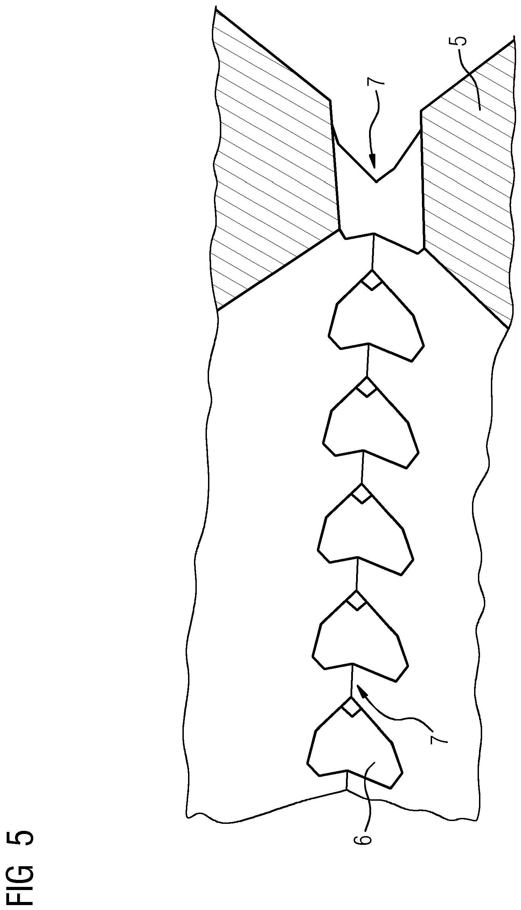

Fig. 5 shows a cutout of a schematic cross-section through a part of the connection connecting the product 2 and the support structure. Herein, the main element 5 of the connection providing the main stability in horizontal direction is shown in detail.

Said element 5 provides a linear wall like structure including holes 6 arranged next to each other along the wall like structure. The holes 6 extend over length of more than 98% of the length of the wall like structure.

Furthermore, the wall like structure provides an X-shaped appearance with indentations 7 on both sides as can be seen in the cross-section perpendicular to the wall like structure as shown in figure 5. This shape is maintained over the complete length of this element 5.

Not shown in figure 5 are the second connection areas located on both sides of the wall like structure providing vertical support, but little resistance against breaking in horizontal direction.

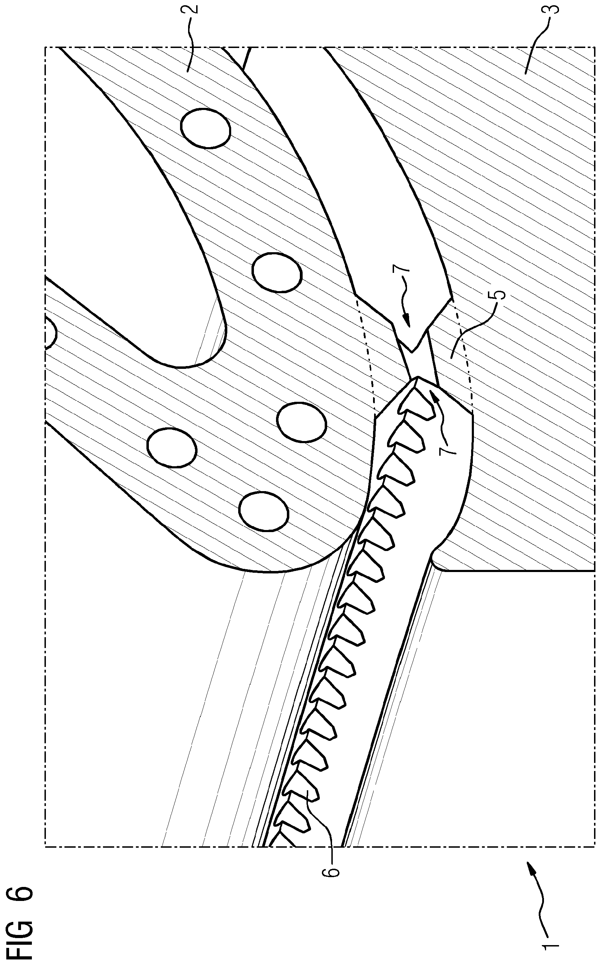

Fig. 6 shows a cutout of a schematic cross-section showing the part of the connection as shown in figure 5 including the corresponding part of the product 2 and the support structure

3. Figure 6 also does not show the part of the connection besides the elements 5 explicitly shown in figure 5. The space currently shown empty on the left and right side of said element 5 is filled with a lattice structure being Magics structure providing little resistance against force applied horizontally to break off the support structure 3.

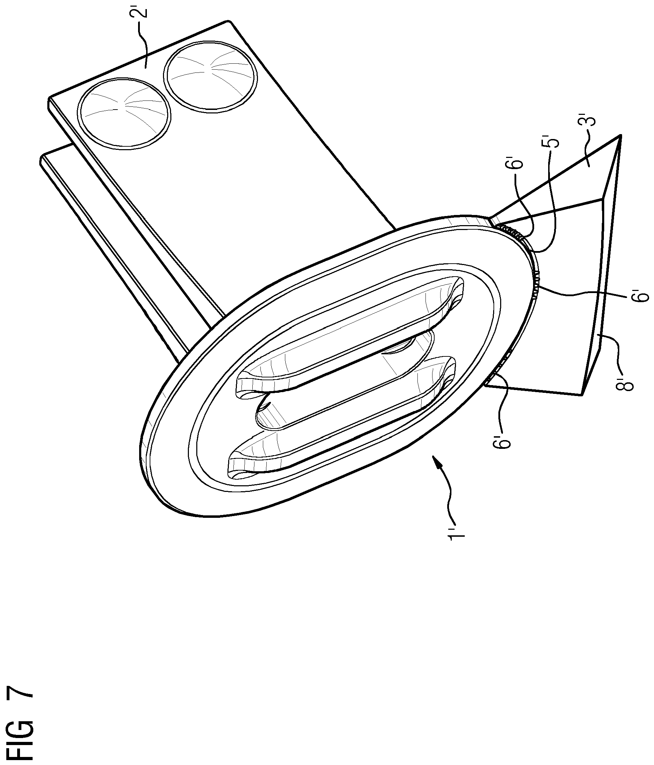

Fig. 7 shows a schematic side view of a clamp being an example of the product 2' as utilized in a gas turbine. The clamp is supported by an inventive support structure 3' representing the supported product 1'. Herein, the connection is comparable to the part of the connection as shown in figure 5. However, the connection in this case consists of element 5. The clamp has been manufactured using selective laser melting starting from the bottom of the support structure 3' representing the side to be placed upon 8'.

The connection is shown in figure 7 provides the significantly lower resistance against breaking when applying force directed parallel to a plane along the side to be placed upon. Although, the force required is already significantly lower such direction, it is even lower the direction slightly inclined to such direction. A corresponding sign indicating this direction available on the side of the support structure 3' is not shown in this figure.

The embodiment is shown in figure 7 only provides this linear wall like structure connecting the support structure 3' around the product. The specific example as shown in figure 7 provides three groups of holes 6' arranged over the length of the connection to further reduce the resistance against breaking when applying force in horizontal direction. Alternatively, the same or different number of holes 6' can also be arranged equidistant over the length of the wall like structure of the connection.

Surprisingly, it was noted that a removal of the remains of the wall like structure is not necessary, although, it can be very easily removed by some grinding step. However, for typical applications remains in this case even have been noted to be beneficial. Surprisingly, it was noted that the very small and defined remains of the connection allow to more easily take the clamp by hand and attach it in its predetermined position. Especially, when using gloves inserting such parts has been significantly simplified this way.

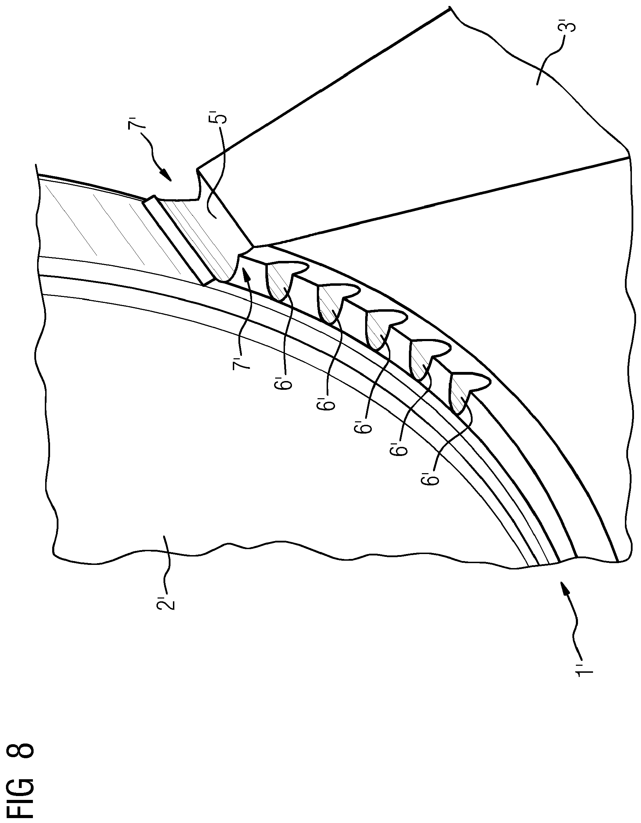

Fig. 8 shows a cutout of the schematic side view of the supported product 1' as shown in figure 7, wherein the end part of the connection supporting the clamp is shown in more detail. This figure clearly shows the indentations 7' on both sides of the wall like structure of the connection. The indentations 7' extend over the complete length of the wall like structure.

Furthermore, figure 8 more clearly shows the five holes 6' available at the end of the wall like structure. Identical groups of holes 6' are located in the middle and the opposite end of the wall like structure, as can be seen in figure 7.

The present invention was only described in further detail for explanatory purposes. However, the invention is not to be understood being limited to these embodiments as they represent embodiments providing additional benefits to solve specific problems or fulfilling specific needs. The scope of the protection should be understood to be only limited by the claims attached.

**Claims**

1. Supported product (1, 1') manufactured using additive manufacturing, preferably 3D printing, wherein the supported product (1, 1') contains a product (2, 2') and a support structure, wherein the product (2, 2') and the support structure (3, 3') are connected by means of a connection providing different resistances against breaking in different directions.

2. Supported product (1, 1') according to claim 1, wherein the supported product (1, 1') provides a side to be placed upon, wherein the connection provides a higher resistance against breaking perpendicular to the side to be placed upon than parallel to a plane along the side to be placed upon.

3. Supported product (1, 1') according to claim 2, wherein the force required for breaking of the support structure (3, 3') perpendicular to the side to be placed upon is at least 3 times the force required for breaking of the support structure (3, 3') parallel to a plane along the side to be placed upon.

4. Supported product (1, 1') according to any of claims 1 to 3, wherein the supported product (1, 1') has been manufactured by selectively melting layers of metal powder and/or metal alloy powder, wherein the connection is adapted to conduct the heat away from the currently processed layer.

5. Supported product (1, 1') according to any of claims 1 to 4, wherein the connection provides at least one first connection area and at least one second connection area, wherein the connection provides a higher stability within the at least one first connection area compared to the connection within the at least one second connection area, wherein the at least one first connection area is a linear area being enclosed by the at least one second connection area.

6. Supported product (1, 1') according to any of claims 1 to 5, wherein the connection provides at least one linear wall like structure, wherein the wall like structure contains holes (6, 6').

7. Supported product (1, 1') according to any of claims 1 to 6, wherein the connection provides at least one wall like structure, wherein the wall like structure providing indentation (7, 7') of the wall like structure in a cross-section perpendicular to the wall like structure over length of at least 90% of the linear wall like structure.

8. Supported product (1, 1') according to claim 7, wherein the wall like structure contains at least X holes (6, 6'), wherein

$$X = \frac{L}{2.3 \cdot H}$$

, wherein L is the average length of the wall like structure and H is the average height of the wall like structure.

9. Supported product (1, 1') according to any of claims 7 to 8, wherein at least 90%, more preferred at least 94%, even more preferred 98%, of the wall like structure provides a distance DH of at most $1.4 \cdot \sqrt{1.2 \cdot S}$, wherein S is the average size of each hole (6, 6') in a cross section along the wall like structure, wherein the percentage of the wall like structure is calculated based on the length along the wall like structure, wherein within the corresponding area of the wall like structure two holes (6, 6') are provided that fulfill this requirement.

10. Product (2, 2') manufactured by removing the support structure (3, 3') of the supported product (1, 1') according to any of claims 1 to 9.

11. Method of manufacturing a product (2, 2') containing the steps of

- manufacturing a supported product (1, 1') according to any of claims 1 to 9 using additive manufacturing, preferably 3D printing, wherein the product (2, 2') provides a side (8') to be placed upon, wherein the support structure (3, 3') is located at this side (8') to be placed upon, and
- removing the support structure (3, 3') from the supported product (1, 1') by applying a force in a direction being not perpendicular to this side (8') to be placed upon.

12. Method of manufacturing a product (2, 2') according to claim 11, wherein the method contains including a sign and/or contact point on the support structure (3, 3') indicating the point or direction to apply force to remove the support structure.

13. Use of the support structure (3, 3') for supporting a product (2, 2') during an additive manufacturing process, wherein the support structure (3, 3') is adapted to be removed to provide the product,
    wherein the product (2, 2') and the support structure (3, 3') are connected by means of a connection providing different resistances against breaking in different directions.

14. Computer program product, tangibly embodied in a machine-readable storage medium, including instructions operable to cause a computing entity to execute a method according to any of claims 11 to 12.

15. Storage device for providing a computer program product according to claim 14, wherein the device stores the computer program product and/or provides the computer program product for further use.

FIG 1

EP 3 791 976 A1

FIG 2

FIG 3

FIG 4

FIG 5

FIG 6

FIG 7

EP 3 791 976 A1

FIG 8

Europäisches
Patentamt

European
Patent Office

Office européen
des brevets

**EUROPEAN SEARCH REPORT**

Application Number

EP 19 19 6484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/319077 A1 (BLANCHET ETIENNE [FR] ET AL) 8 November 2018 (2018-11-08)<br>* paragraph [0010] - paragraph [0018] *<br>* paragraph [0023] - paragraph [0025] *<br>* paragraph [0053] *<br>* paragraph [0055] - paragraph [0058] *<br>* claims 1-3 *<br>* figures 2,4,7 * | 1-6,8-15 | INV.<br>B22F3/105<br>B33Y10/00<br>B33Y30/00<br>B33Y80/00<br>B29C64/153<br>B29C64/40<br>B28B1/00<br>B29C67/00 |
| X | US 2006/186101 A1 (HAGEMEISTER FRANK [DE] ET AL) 24 August 2006 (2006-08-24)<br>* abstract *<br>* figure 4 *<br>* claims 1,13 *<br>* paragraph [0003] *<br>* paragraph [0016] *<br>* paragraph [0013] * | 1-6,8-15 | B23K15/00<br>B22F5/04 |
| X | DE 10 2017 208520 A1 (PREMIUM AEROTEC GMBH) 22 November 2018 (2018-11-22)<br>* abstract *<br>* figures 7, 13,14,21-24 *<br>* paragraph [0068] - paragraph [0069] *<br>* paragraph [0149] * | 1-15 | |
| X | US 2018/326495 A1 (DREANO SÉBASTIEN [FR]) 15 November 2018 (2018-11-15)<br>* abstract *<br>* figures 4,5 *<br>* claims 1,6,9 *<br>* paragraph [0030] * | 1-15 | TECHNICAL FIELDS SEARCHED (IPC)<br><br>B22F<br>B33Y<br>B29C<br>B28B<br>B23K |
| A | US 2019/022927 A1 (VIAL MATTHIEU [FR] ET AL) 24 January 2019 (2019-01-24)<br>* the whole document * | 1-15 | |

-/--

The present search report has been drawn up for all claims

| Place of search | Date of completion of the search | Examiner |
|---|---|---|
| The Hague | 16 December 2019 | Godino Martinez, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 791 976 A1

Europäisches Patentamt
European Patent Office
Office européen des brevets

## EUROPEAN SEARCH REPORT

Application Number

EP 19 19 6484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 754 515 A2 (HONEYWELL INT INC [US]) 16 July 2014 (2014-07-16) * the whole document * | 1-15 | |
| A | WO 2018/158009 A1 (MAT SOLUTIONS LIMITED [GB]) 7 September 2018 (2018-09-07) * the whole document * | 1-15 | |

TECHNICAL FIELDS
SEARCHED      (IPC)

The present search report has been drawn up for all claims

| Place of search | Date of completion of the search | Examiner |
|---|---|---|
| The Hague | 16 December 2019 | Godino Martinez, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 19 19 6484

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2019

| Patent document cited in search report | | Publication date | Patent family member(s) | | Publication date |
|---|---|---|---|---|---|
| US 2018319077 | A1 | 08-11-2018 | CN 108349003 A | | 31-07-2018 |
| | | | EP 3370901 A1 | | 12-09-2018 |
| | | | FR 3043347 A1 | | 12-05-2017 |
| | | | US 2018319077 A1 | | 08-11-2018 |
| | | | WO 2017076983 A1 | | 11-05-2017 |
| US 2006186101 | A1 | 24-08-2006 | AT 433727 T | | 15-07-2009 |
| | | | CA 2427087 A1 | | 03-11-2003 |
| | | | DE 10219983 A1 | | 04-12-2003 |
| | | | EP 1358855 A1 | | 05-11-2003 |
| | | | ES 2325656 T3 | | 11-09-2009 |
| | | | JP 4259912 B2 | | 30-04-2009 |
| | | | JP 2004003018 A | | 08-01-2004 |
| | | | US 2004031780 A1 | | 19-02-2004 |
| | | | US 2006186101 A1 | | 24-08-2006 |
| DE 102017208520 | A1 | 22-11-2018 | CN 110312585 A | | 08-10-2019 |
| | | | DE 102017208520 A1 | | 22-11-2018 |
| | | | WO 2018210951 A1 | | 22-11-2018 |
| US 2018326495 | A1 | 15-11-2018 | BR 112018009819 A2 | | 13-11-2018 |
| | | | CA 3003368 A1 | | 26-05-2017 |
| | | | CN 108349006 A | | 31-07-2018 |
| | | | EP 3377254 A1 | | 26-09-2018 |
| | | | FR 3043577 A1 | | 19-05-2017 |
| | | | JP 2019502056 A | | 24-01-2019 |
| | | | US 2018326495 A1 | | 15-11-2018 |
| | | | WO 2017085383 A1 | | 26-05-2017 |
| US 2019022927 | A1 | 24-01-2019 | FR 3046556 A1 | | 14-07-2017 |
| | | | US 2019022927 A1 | | 24-01-2019 |
| | | | WO 2017118806 A1 | | 13-07-2017 |
| EP 2754515 | A2 | 16-07-2014 | EP 2754515 A2 | | 16-07-2014 |
| | | | US 2014199175 A1 | | 17-07-2014 |
| WO 2018158009 | A1 | 07-09-2018 | EP 3589439 A1 | | 08-01-2020 |
| | | | GB 2564832 A | | 30-01-2019 |
| | | | WO 2018158009 A1 | | 07-09-2018 |

EPO FORM P0459

For more details about this annex : see Official Journal of the European Patent Office, No. 12/82